(19) Europäisches Patentamt

European Patent Office

Office européen des brevets

(11) **EP 1 000 347 B1**

(12) **EUROPEAN PATENT SPECIFICATION**

(45) Date of publication and mention
of the grant of the patent:
**04.12.2002 Bulletin 2002/49**

(21) Application number: **98937640.5**

(22) Date of filing: **31.07.1998**

(51) Int Cl.[7]: **G01N 23/20**

(86) International application number:
**PCT/GB98/02316**

(87) International publication number:
**WO 99/006824 (11.02.1999 Gazette 1999/06)**

(54) **METHOD AND APPARATUS FOR DETERMINING MOLECULAR CRYSTAL STRUCTURES**

VERFAHREN UND VORRICHTUNG ZUM ERFASSEN VON MOLEKÜLKRISTALLSTRUKTUREN

PROCEDE ET APPAREIL PERMETTANT DE DETERMINER LES STRUCTURES DE CRISTAUX
MOLECULAIRES

(84) Designated Contracting States:
**GB**

(30) Priority: **31.07.1997 GB 9716278**

(43) Date of publication of application:
**17.05.2000 Bulletin 2000/20**

(73) Proprietor: **COUNCIL FOR THE CENTRAL
LABORATORY OF THE RESEARCH COUNCILS
Chilton Didcot, Oxfordshire OX11 0QX (GB)**

(72) Inventors:
• **DAVID, William, Ian, Fraser
Oxfordshire OX14 2BZ (GB)**
• **SHANKLAND, Kenneth
Oxford OX14 3PG (GB)**

(74) Representative: **Perkins, Sarah
Stevens, Hewlett & Perkins
Halton House
20/23 Holborn
London EC1N 2JD (GB)**

(56) References cited:
• **K. SHANKLAND: "Crystal structure
determination from powder diffraction dada by
the application of a genetic algorithm."
ZEITSCHRIFT FÜR PHYSIK, vol. 212, no. 8, 8
August 1997, pages 550-552, XP002087730**
• **B. M. KARIUKI ET AL.: "The application of a
genetic algorithm for solving crystal structures
from powder diffraction data." CHEMICAL
PHYSICS LETTERS, vol. 280, no. 3,4, 5
December 1997, pages 189-195, XP002087731**

## Description

The present invention provides an improved method and apparatus for determining molecular crystal structures from powder diffraction data. In particular, the present invention enables molecular crystal structures to be identified using only powder diffraction data in a manner that is considerably faster than is currently the case. Furthermore, with the present invention the molecular crystal structure of large organic molecules, such as pharmaceutical compounds, can be determined using data from powder diffraction analysis.

Information on the molecular crystal structure of a molecule is usually obtained through irradiation of a single crystal of the molecule with neutrons or X-rays. Subsequent analysis of the resultant diffraction pattern, which consists of a series of angularly spaced intensity peaks with each peak representing an individual Bragg reflection, provides information on the structure. Whilst this single crystal diffraction technique is an effective technique for determining the crystal structure of a molecule, it can often prove difficult to grow the single crystals necessary for the analysis. Moreover, where the molecule can crystallise in more than one polymorphic form, it is sometimes the case that it can prove very difficult to grow a single crystal of a particular polymorph.

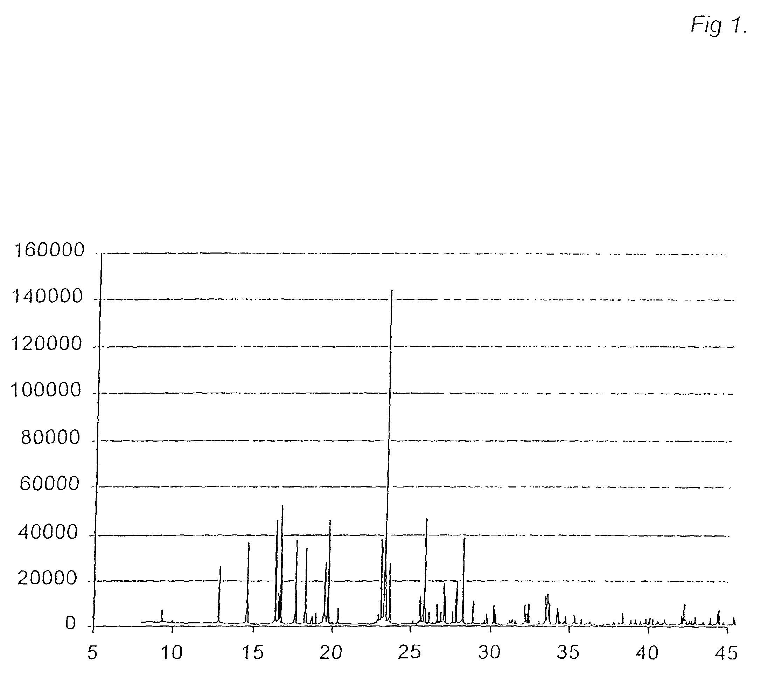

To address these problems, a powder diffraction analysis was developed in which a crystalline powder of the material under analysis is irradiated instead of a single crystal. Analysis of the resultant diffraction pattern is hampered by the fact that the diffraction pattern may include Bragg reflections that partially or fully overlap one another, making it difficult for individual reflections to be identified, and their associated intensities quantified. An example of experimental data from irradiation of a powder sample of the drug substance cimetidine in the form of a graph representing intensity of the Bragg reflections with respect to angular position is shown in Figure 1. Currently, in order to identify molecular crystal structures diffraction patterns of this type are used in a point-to-point comparison with diffraction data calculated from a postulated model of the crystal structure. If there is good agreement between the measured and calculated diffraction data, it may be assumed that the postulated structure is close to the true crystal structure of the molecule. In general, good agreement is only obtained when there is significant prior knowledge of the true crystal structure of the molecule, as there is an infinite number of crystal structures that may be postulated and compared to the experimental data. Moreover, such analysis is very slow and time consuming because of the extremely large body of point-to-point data that must be compared for each postulated crystal model in turn.

The present invention seeks to address the problems discussed above with respect to existing diffraction analysis techniques and in particular to provide a method and apparatus that is considerably faster than conventional techniques. The present invention further seeks to provide a method and apparatus for determining molecular crystal structures which employs data obtained from the irradiation of crystalline powders and permits analysis without the need for prior knowledge of any approximate crystal structure.

The present invention provides a method for determining molecular crystal structures from powder diffraction data comprising the steps of:

generating a reduced representation of the powder diffraction pattern in dependence on a predetermined unit cell and space group of the molecule under examination in which the total quantity of diffraction data is significantly reduced whilst maintaining the characteristics of the diffraction data that are representative of the crystal structure under examination;

determining a set of variables for describing trial molecular structures, derived from predetermined internal co-ordinates and said space group;

assigning values to said variables thereby creating a population of trial structures each defined by a unique set of values for said variables;

calculating a fitness for each trial structure with respect to the reduced representation of the powder diffraction pattern; determining whether any one of the calculated fitnesses is less than or equal to a predetermined threshold; where none of the calculated fitnesses is less than or equal to the threshold value, selecting at least one survivor from the population of trial structures, altering the values of the variables of at least one of the survivors in accordance with one or more predetermined rules, calculating the fitnesses of the new trial structures; and repeating the steps of selecting survivors, altering the values of the variables and calculating the fitnesses of the new trial structures until at least one of the calculated fitnesses is less than or equal to the threshold value, and where at least one of the calculated fitnesses is less than or equal to the threshold, outputting at least one trial molecular crystal structure represented by the successful sets of values.

In a further aspect the present invention provides apparatus for determining molecular crystal structures comprising a structure factor analyser for generating from experimental powder diffraction data for the molecule under examination a reduced representation of the powder diffraction pattern based on a predetermined unit cell and space group in which the total quantity of diffraction data is significantly reduced whilst the characteristics of the diffraction data representative of the crystal structure under examination are maintained; a controller for determining a set of variables for describing trial molecular structures, derived from predetermined internal co-ordinates and said space group; a searching processor for creating a population of trial structures each defined by a unique set of values for said variables said searching processor including a fitness analyser for calculating a fitness for each trial structure with respect to the reduced representation of the powder diffraction pattern, a thresholding device for determining whether any one of the calculated fitnesses is less than or equal to a predetermined threshold, a survivor selector for selecting at least one survivor from the population of trial structures, a variable adjustment device for altering the values of the variables of at least one of the survivors and output means for outputting the one or more trial molecular crystal structures having calculated fitnesses less than or equal to the threshold value.

The reduced representation preferably consists of identification of each reflection in the powder diffraction data along with associated weighting factors and ideally is in the form of a structure factor intensity listing and associated covariance matrix. Reference herein to reflections is intended as reference to individual Bragg reflections or peaks in the diffraction data resulting from reflections of the incident radiation from the structure of the molecule.

Moreover, preferably, the fitness $\chi^2$ of each of the trial structures is determined using the following function:

$$\chi^2 = \Sigma_h\,\Sigma_k\,\{(I_h - c|F_h|^2)\,(V^{-1})_{hk}\,(I_k - c|F_k|^2)\}$$

where:

I_{h,k} = extracted intensity from the structure factor analyser
$V_{hk}$ = covariance matrix from the structure factor analyser
c = a scale factor
$F_{h,k}$ = calculated structure factor from trial structure

The plurality of co-ordinates preferably consist of three co-ordinates representative of the location of the molecule within the unit cell, three co-ordinates representative of the orientation of the molecule within the unit cell and one or more co-ordinates representative of respective torsion angles.

In a preferred embodiment the structure factor analyser additionally automatically determines the optimal unit cell and space group for the molecule under examination instead of the unit cell and space group being predetermined manually and input into the structure factor analyser. More, preferably a co-ordinate generator is provided for automatically determining the set of internal co-ordinates instead of the set of internal co-ordinates being predetermined manually and input into the controller.

The search for a three dimensional structure of a molecule which would produce a powder diffraction pattern nearly identical to available experimental results is greatly simplified with the present invention and considerably speeded up by a factor of typically up to 1000 or more. This is achieved by the reduction of trial molecular crystal structures to a unique set of variables that does not explicitly include the co-ordinates of individual atoms in the molecule but instead includes a single set of co-ordinates for the location and orientation of the entire molecule. Reduction of the experimental powder diffraction data to data representative of each reflection in combination with a weighting factor also assists in speeding up the analysis of trial crystal structures in which the fitness of each trial structure with respect to the reduced experimental data is determined using structure factor analysis.

The present invention relies on the fact that at its most basic, a molecular crystal structure can be represented by a set of internal co-ordinates describing the molecule under investigation together with co-ordinates describing the location and orientation of the molecule within a unit cell of which only some but not all need be variable. The reduction of the molecular crystal structure to such a set of variables enables analysis of the trial structures to be performed much more quickly than an analysis performed using the conventional method of describing the crystal structure in terms of the fractional or Cartesian co-ordinates of every atom in the asymmetric unit of the structure. Such conventional representations are considered to be unworkable in a model building sense because of the computing power necessary to position individual atoms independently of each other.

The representation of the trial structures used in the invention along with the novel fitness function means that analyses can be performed in seconds or minutes on the current generation of conventional personal computers or workstations. Moreover, the representation is versatile as it allows the invention to work with flexible molecules as well as multiple fragments.

An embodiment of the present invention will now be described by way of example with reference to the accompanying drawings, in which:

Figure 1 is a graph of experimental data from x-ray powder diffraction analysis of cimetidine showing 315 reflections, using an irradiation wavelength of 1.5285Å and a data range for 2θ of 8°-56°:
Figure 2 is a schematic representation of the 2D molecular structure of cimetidine;
Figure 3 is a flow diagram of the method steps for determining a molecular structure in accordance with the present invention;
Figure 4 is a diagram of the crystal structure of cimetidine;
Figures 5a, 5b, 5c and 5d are diagrams showing the progressive development of a trial crystal structure for cimetidine, employing the method and apparatus in accordance with the present invention, overlying the diagram of Figure 4;

Figure 6 is a graph showing the fitness of a trial crystal structure for cimetidine with respect to generations, employing the method and apparatus in accordance with the present invention;

Figures 7a, 7b and 7c show the molecular structure of dopamine deuterobromide, a graph of the development of a trial structure for the crystal and a diagram of the solution respectively, employing the method and apparatus of the present invention;

Figure 8 is a graph of experimental data from x-ray powder diffraction analysis of capsaicin using an irradiation wavelength of 0.6528Å and a data range for 2θ of 2.7°-22.5°;

Figure 9 is a tabulation of part of the reduced representation of the powder diffraction data of Figure 8 generated in accordance with the method of the present invention; and

Figure 10 is a diagram comparing the crystal structure of capsaicin obtained from single crystal diffraction data with the crystal structure obtained using powder diffraction data alone in a method in accordance with the present invention.

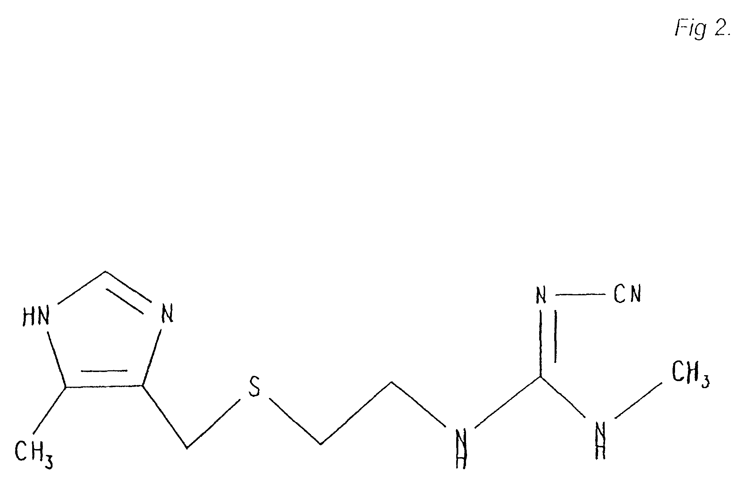

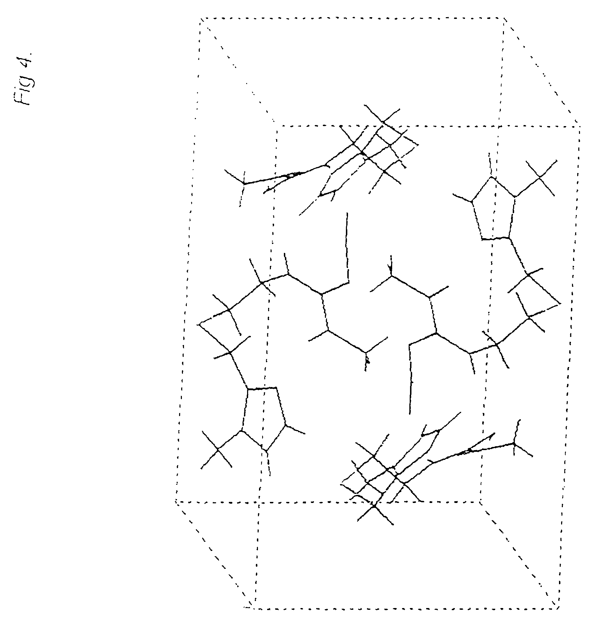

The present invention will be described with reference to an experimental determination of the crystal structure of the molecule cimetidine, a histamine $H_2$ antagonist used in the treatment of stomach ulcers, for which a full single crystal structure (monoclinic Form A) determination has already been performed. Figure 2 shows the 2D chemical formula of the cimetidine molecule, whilst the known arrangement of the cimetidine molecules within the unit cell of the crystal structure is shown in Figure 4.

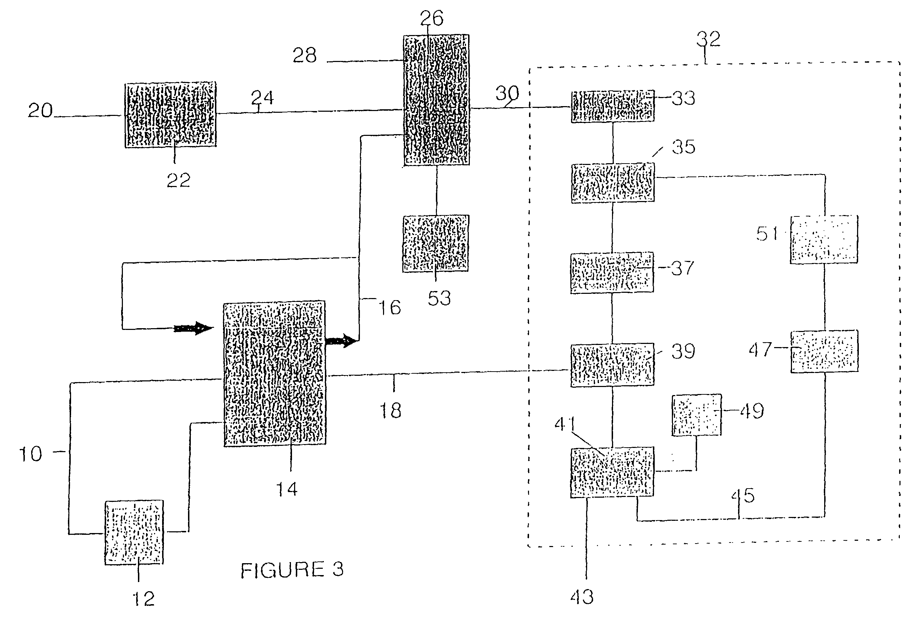

To determine the molecular crystal structure of cimetidine employing the method and apparatus of the present invention with reference to Figure 3, initially a conventional powder diffraction pattern (10) is obtained from a crystalline powder sample of cimetidine. The resultant diffraction pattern is shown in Figure 1. The experimental diffraction data (10) is input into a cell dimension analyser (12). The cell dimension analyser (12) uses conventional techniques to assess the diffraction pattern in order to determine the unit cell dimensions of the crystal structure. The generation of the unit cell dimensions may alternatively be performed manually, however, it is preferred that the unit cell dimensions be generated automatically using the crystal modelling apparatus. The diffraction pattern is also input to a structure factor analyser (14) that also receives the unit cell dimensions determined by the analyser (12). The structure factor analyser (14) analyses the experimental diffraction pattern using the lowest symmetry space group consistent with the crystal class determined by the cell dimension analyser (12), reducing the data to a first structure factor intensity listing and an associated covariance matrix. From this listing, the true space group (16) of the crystal structure is determined and used by the structure factor analyser (14) to generate a second structure factor intensity listing and associated covariance matrix (18). By generating this second structure factor intensity listing and associated covariance matrix (18), the total quantity of the original experimental diffraction data is significantly reduced in amount without loss of those characteristics of the data representative of the crystal structure under examination. The original data can be reduced by a factor typically equal to the number of data points in the original powder diffraction data divided by the number Bragg reflections in the measured data range. Thus, the experimental diffraction data is not presented for analysis as a point-by-point profile, but rather in a reduced data form enabling the data to be analysed using a fitness function described in greater detail below. In performing the reduction of the original data the individual Bragg reflections (peaks) are identified and each reflection is allocated a value representative of its intensity along with one or more factors that describe the extent to which the reflection overlaps with one or more adjacent reflections

As an example of the extent to which the powder diffraction data is reduced, typically powder diffraction data will contain between 2000 and 5000 individual data points with the reduced representation of the diffraction data the total number of data points is reduced to between 100 and 400. Hence, the original data is reduced by a factor of between 10 and 30 whilst still retaining the characteristics of the original data. Furthermore, the speed of analysis of each individual data point is increased over conventional techniques because with the original powder diffraction data the analysis of each data point includes not only the structure factor but also a factor representative of the shape of the peak. With the reduced data the analysis of each data point is reduced to only the structure factor.

Where the selected space group based on the unit cell dimensions does not prove to be the correct space group, the method described above is repeated using different space groups until the correct space group is identified.

Using the known 2D chemical formula for cimetidine (20), a co-ordinate generator (22) determines a set of internal co-ordinates (24) which completely describe the three dimensional structure of the molecule. The internal co-ordinates (24) include known data using tabulated bond lengths, bond angles and rigid torsion angles, where necessary, along with identification of unknown variables such as flexible torsion angles. When postulated values for the unknown variables are added, sufficient information is present in the internal co-ordinates to define the conformation of an isolated theoretical cimetidine molecule.

Preferably, the only unknown factors and so the only variables to be found in the internal co-ordinates are the values of the variable torsion angles (represented by variables $\tau_1$, $\tau_2$, $\tau_3$, $\tau_4$, $\tau_5$). It is not essential for the bond lengths and bond angles to be held fixed and where appropriate these factors too may be varied in determining the crystal structure of the molecule. It has been found though that variation of the bond lengths and bond angles within chemically sensible bounds has a much smaller effect on the calculated diffraction data than variation of the flexible torsion angles within the structure. Thus for most purposes, acceptable results can be achieved with these factors held fixed.

Generation of the set of internal co-ordinates may alternatively be performed manually in which case the manually generated set of internal co-ordinates is input into the crystal modelling apparatus.

The output (24) of the co-ordinate generator (22) is supplied to a controller (26) that is also connected to the space group output (16) of the structure factor analyser (14). The controller (26) also includes an input (28) to enable manual setting of selected operational parameters such as the number of trial structures to be analysed in each generation, i.e. the population size. The controller (26) uses the internal co-ordinates and the space group to determine additional variables representing the location and orientation of a molecular structure in the unit cell. Preferably, the location of the molecular structure within the unit cell is defined using a single reference point in fractional co-ordinate space represented by external co-ordinates or variables (x, y, z). The orientation of the molecule at that point may be described using Euler angles ($\alpha$, $\beta$, $\gamma$). Alternatively, the orientation of the molecule may be described using a quaternion, $q$.

In this way the molecular crystal structure is reduced to a set of variables consisting of internal and external co-ordinates:

$\{x, y, z, \alpha, \beta, \gamma, \tau_1, \tau_2, \tau_3, \tau_4, \tau_5...\}$ or $\{x, y, z, q, \tau_1, \tau_2, \tau_3, \tau_4, \tau_5...\}$.

These variables are suitable for iterative mathematical processing and are more amenable to search procedures than the full complement of individual atomic co-ordinates used in conventional techniques.

The output (30) from the controller (26) is then supplied to an iterative searching processor (32). The output (30) consists of the set of variables determined by the controller (26); the complete internal co-ordinates produced by the co-ordinate generator (22); operating parameters such as the selected size of the population to be employed in the searching procedure; any rules restricting or controlling the values which can be allocated to each of the variables; and any rules controlling the selection of survivors, the breeding and the mutation of survivors, described in greater detail below.

In the method shown in Figure 3, the iterative searching processor (32) employs a genetic algorithm to determine the correct molecular crystal structure. The above mentioned set of variables $\{x, y, z, \alpha, \beta, \gamma, \tau_1, \tau_2, \tau_3, \tau_4, \tau_5...\}$ or $\{x, y, z, q, \tau_1, \tau_2, \tau_3, \tau_4, \tau_5...\}$ are thus equated to chromosomes, with each individual variable equating to a gene. The genetic algorithm establishes certain protocols based on the concept of 'survival of the fittest', with respect to the selection of survivors, the breeding and the mutation of survivors.

Firstly, within the searching processor (32) an initial population of chromosomes is created (33) by assigning random numbers to each of the genes of each of the chromosomes. The allowable random numbers for any particular gene may be restricted in accordance with rules input from the controller (26). The selected size of this initial population depends somewhat upon the complexity of the structure under investigation, with larger population sizes typically being required for problems involving more variables. In the case of cimetidine, where seven torsion angles were allowed to vary, resulting in thirteen degrees of freedom, a population size of 150 was chosen. The fractional co-ordinates (x, y, z) and Euler angles are randomly set as real numbers normally bounded by the Euclidian normalisers of the space group. The variable torsion angles ($\tau$) are typically randomly set as real numbers in the range 0°-360°.

Using the internal co-ordinates a three dimensional structure of the trial molecule is constructed (35) for each parent in Cartesian space, and then in fractional space with respect to the crystal unit cell. Diffraction data is then determined (37) for each of the trial molecular structures and a fitness value, $\chi^2$, is calculated (39) for each trial structure with respect to the structure factor intensity listing and covariance matrix. The preferred fitness function employed is as follows:

$$\chi^2 = \Sigma_h \, \Sigma_k \, \{(I_h - c|F_h|^2) \, (V^{-1})_{hk} \, (I_k - c|F_k|^2)\}$$

where:

$I_{h,k}$ = extracted intensity from the structure factor analyser

$V_{hk}$ = covariance matrix from the structure factor analyser

c = a scale factor

$F_{h,k}$ = calculated structure factor from trial structure

In determining the fitness value, $\chi^2$, the optimal value of the scale factor c must be determined. This is preferably done by performing a conventional linear least squares analysis to determine the optimal scaling factor between the calculated structure factors and the reduced data. In addition to optimising with respect to the scale factor, the fitness value, $\chi^2$, may also be optimised with respect to quantities such as an overall temperature factor or a preferred orientation parameter in which case a conventional non-linear least squares analysis is preferably performed.

The fitness values for each of the chromosomes is compared to a predetermined threshold value (41) so that in the event any one of the chromosomes is less than or equal to the threshold value a solution for the molecular structure is output (43). In the event that the fitness values of all of the chromosomes exceed the threshold value, the chromosomes are then supplied (45) to a survivor selector (47). At the same time a counter (49) is increased by one so that a record of the number of generations created is maintained.

Using the fitness values obtained for each of the chromosomes, the survivor selector (47) employs a proportional selection scheme, in which the chances of a chromosome surviving are proportional to its fitness, to select a number of survivors. Other criteria for selecting survivors may alternatively be used. For example, a tournament selection may be employed in which case two chromosomes are selected at random and compared with one another, with the fittest surviving. In particular the Boltzmann tournament may be used as it introduces an element of simulated annealing to the selection process. In addition, the selection may be elitist with the best member of the population in terms of fitness always surviving to enter the next generation.

Additional fitness functions may also be employed instead of, or in combination with the aforementioned fitness function, to further enhance the analysis of the trial structures. For example, simultaneous fitting of both X-ray and neutron diffraction data; use of a molecular packing function; use of an isolated molecule Lennard-Jones type calculation; use of a rotation / translation function: and use of phase information derived from direct / Patterson methods.

Although the above method is described in terms of the entire population being subject to a common selection, the population may be divided into subpopulations in which each sub-population evolves independently of the other sub-populations albeit that migration from one sub-population to another can be enabled.

The surviving chromosomes are then used to create offspring (51) by allowing the chromosomes to 'breed'. For example, individual genes from different chromosome survivors may be mixed and/or one or more of the genes in a chromosome survivor or its offspring may be mutated by random selection of a new value for the gene. Often, the population size is kept constant throughout this breeding process. The three dimensional structure of each of the offspring is then determined (35), as before, and theoretical diffraction data calculated (37).

The fitness ($\chi^2$) is then evaluated (39) for each of the offspring and the fitness results compared (41) to the predetermined threshold value to determine whether a likely crystal structure for the molecule has been identified. If one of the offspring chromosomes has a fitness value which is less than or equal to the threshold value, or if a predetermined maximum number of generations has been reached, then the search procedure is stopped (43). On the other hand, if the fitness functions of the chromosome offspring all exceed the threshold value and the counted number of generations is less than the maximum allowed number, then the offspring are returned for the selection of survivors (47) and for the creation of new offspring (51).

Additional rules may also be employed where appropriate to constrain the allowable values for the variables. These rules are determined by the controller (26) that may utilise data on crystal fragments stored in a memory (53). For example, the controller (26) may search through stored crystallographic databases of known crystal structure fragments related to the molecule to provide prior information about torsion angle values likely to be adopted by the structure. Such information can then be implemented either as hard limits on the allowable values the torsion angles may adopt, or as probability distributions for the torsion angles. Furthermore, fragments of the molecule may be located using Patterson methods or direct methods. For example, the location of a heavy atom may be used to anchor a molecule during the analysis by the searching processor (32). This effectively reduces the dimensionality of the problem by three as the fractional reference co-ordinates are then known.

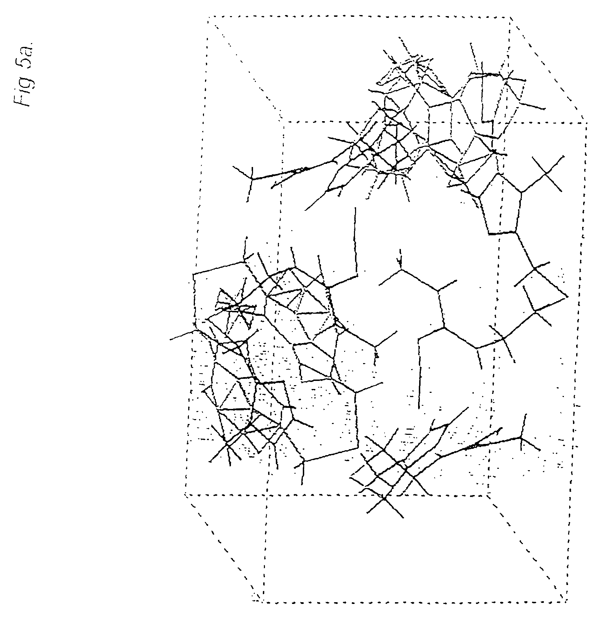

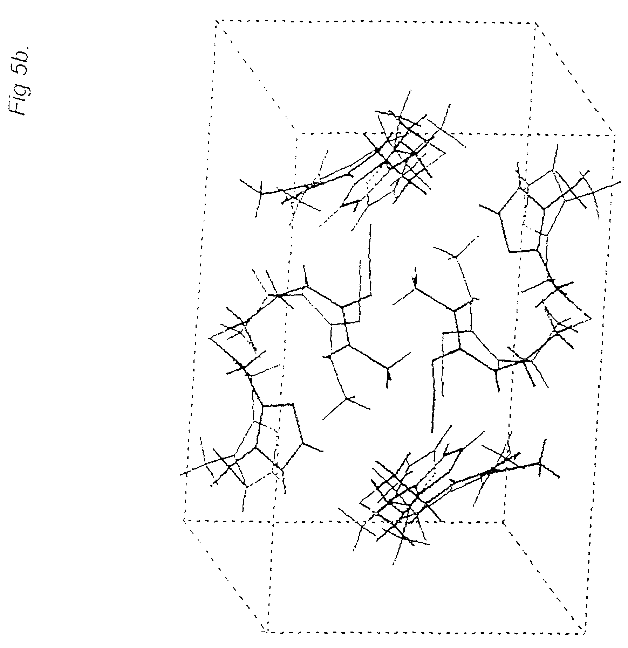

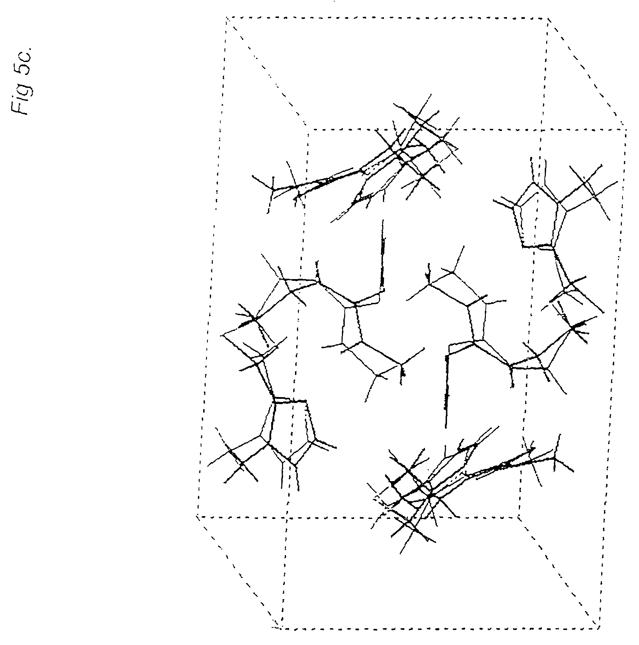

Operation of the processor (32) in the search for the correct 3D molecular crystal structure is thus an iterative procedure with the average fitness for each generation gradually tending towards the global minimum in fitness function space. In Figure 5a, a trial cimetidine crystal structure, corresponding to a chromosome in the first generation initialised at random by the processor (32), is shown overlying the true crystal structure first shown in Figure 4. Figure 5b then shows one of the early offspring determined by the processor having a fitness value of $\chi^2=980$, again overlying the true crystal structure of cimetidine. In Figure 5c, a later offspring having a fitness value of $\chi^2=430$ is shown and the improvement in correspondence between the trial crystal structure and the actual crystal structure is immediately evident. At this point, the crystal structure could be refined using a conventional constrained Rietveld refinement. Hence, the processor (32) may be arranged so that the threshold value for the fitness function is set at around 450. This would result in the search procedure being stopped once the trial structure shown in Figure 5c had been generated, thereby enabling alternative methods to be used to refine the fine details of the trial structure. The advantage of stopping the search procedure at this point is that, usually, conventional methods will be able to refine the fine details of the structure more efficiently than the presently described method and apparatus.

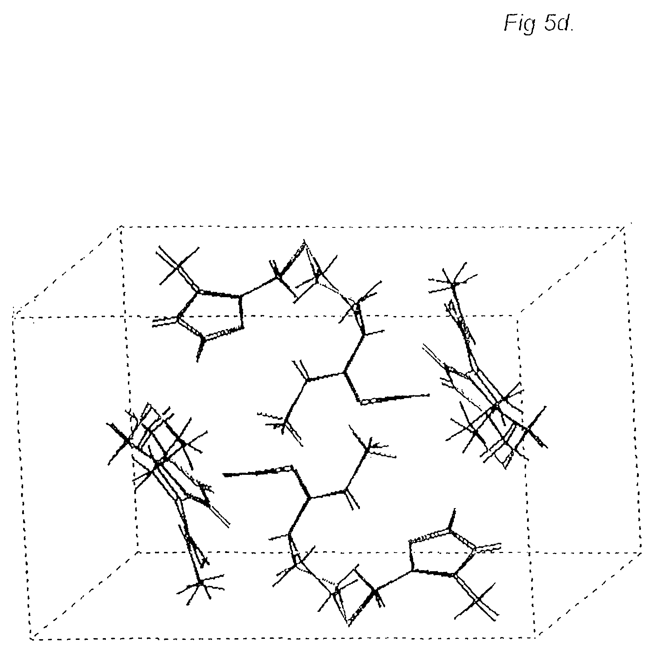

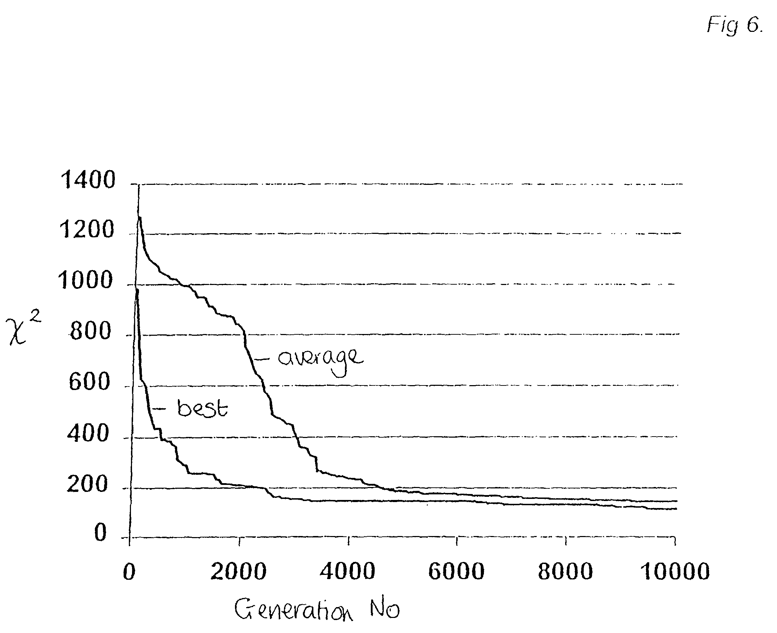

Continuing with the present method, in Figure 5d an offspring having a fitness value of $\chi^2=110$ is shown at which point the detail of the trial structure is easily refinable. Figure 6 is a graph of trial results for cimetidine using the method described above showing the fitness value of offspring with respect to the number of generations for both average fitness and the best fitness. As can be seen, a refinable structure is obtained within a few hundred generations, and an easily refinable structure is obtained around 3000 generations. This latter structure corresponds to an elapsed time of approximate 40 minutes, with the processor running on a single 175MHz R10000 Silicon Graphics™ workstation.

As further examples for the speed of this method, easily refinable structures for pyrene were determined in around 33 seconds, around 15 seconds for chlorothiazide and 36 minutes for Ibuprofen, with all calculations being performed on a single 200MHz Pentium Pro™ personal computer.

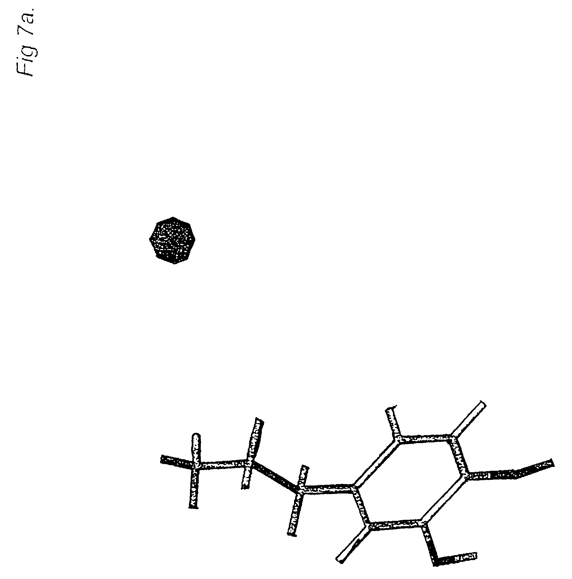

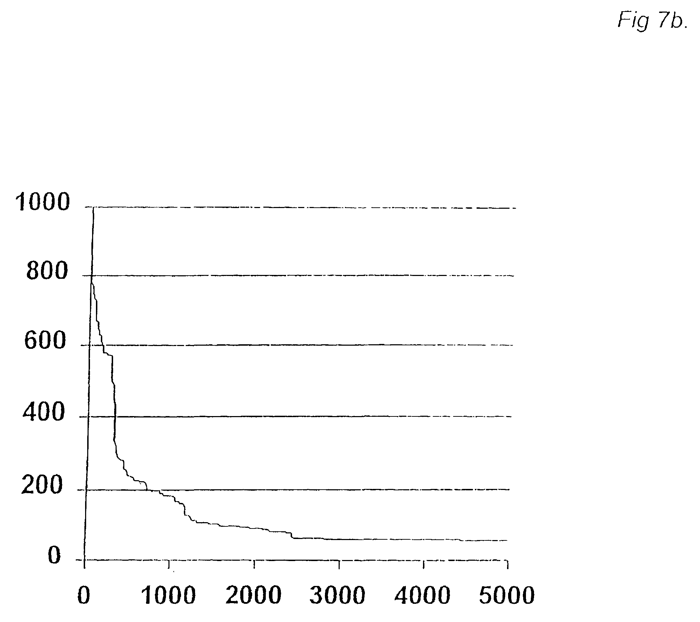

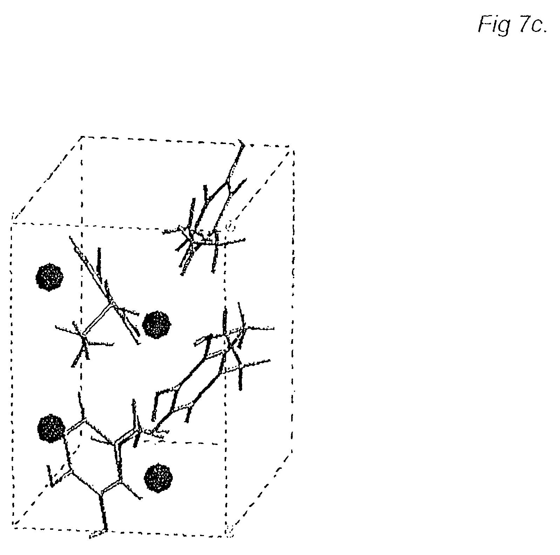

The above method and apparatus may also be used with molecular structures consisting of more than one fragment. As shown in Figures 7a, 7b and 7c an easily refinable structure solution for dopamine deuterobromide using neutron powder diffraction data was achieved in around only 4000 generations. This structure involves not only a dopamine cation, but also a separate bromide anion. Using the present method and apparatus the location, orientation and conformation of the cation, and the location of the anion can be determined simultaneously.

Whilst in the examples given above the individual genes are real numbers, they could equally be represented by binary strings or integer approximations with appropriate scaling factors. Also, in the example given above the experimental diffraction data is reduced to a structure factor listing and associated covariance matrix, it will be apparent that alternative ways of reducing the total quantity of diffraction data may be employed which, although providing less faithful representations of the diffraction data, nevertheless preserve sufficient characteristics of the original diffraction data to enable a successful structure determination to be performed. For example the data relating to the correlation of reflections may be omitted from the reduced representation.

In the above example a genetic algorithm searching processor is employed to perform an iterative selection of candidate molecular crystal structures. Alternative iterative analysis processes such as simulated annealing, evolutionary strategies and neural network analysis may be used instead of the genetic algorithm. For example, using a simulated annealing process, only a single member is normally utilised and the same variables that were treated as genes by the genetic algorithm are individually adjusted by a small perturbation of their current values. If the function value ($\chi^2$ as defined previously) is better than before, then the new values of the variables are retained. If the function value is worse, then the new values of the variables are not automatically rejected. Instead the new values may be retained if allowed by the temperature dependent Boltzmann selection protocol. In this way, 'uphill' (in terms of $\chi^2$) adjustment of the variables is permissible, helping the algorithm to escape from local minima. The initial choice of the temperature is usually high to allow large 'uphill' moves if necessary, but the temperature is usually lowered in some predetermined fashion during the iterative process. One such way is a temperature reduction that cools more slowly if the $\chi^2$ fluctuations are large.

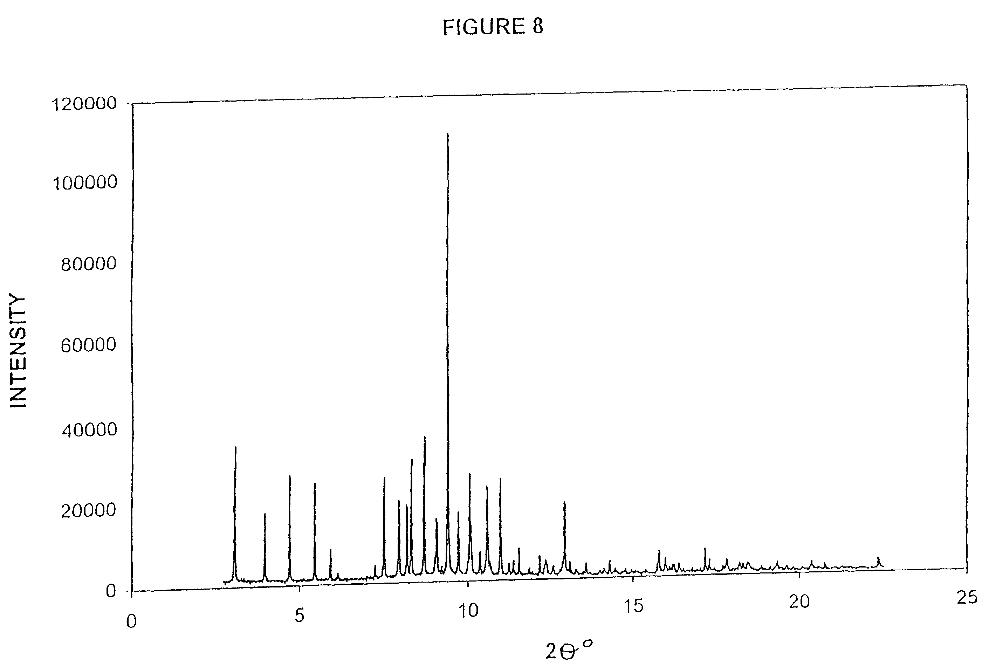

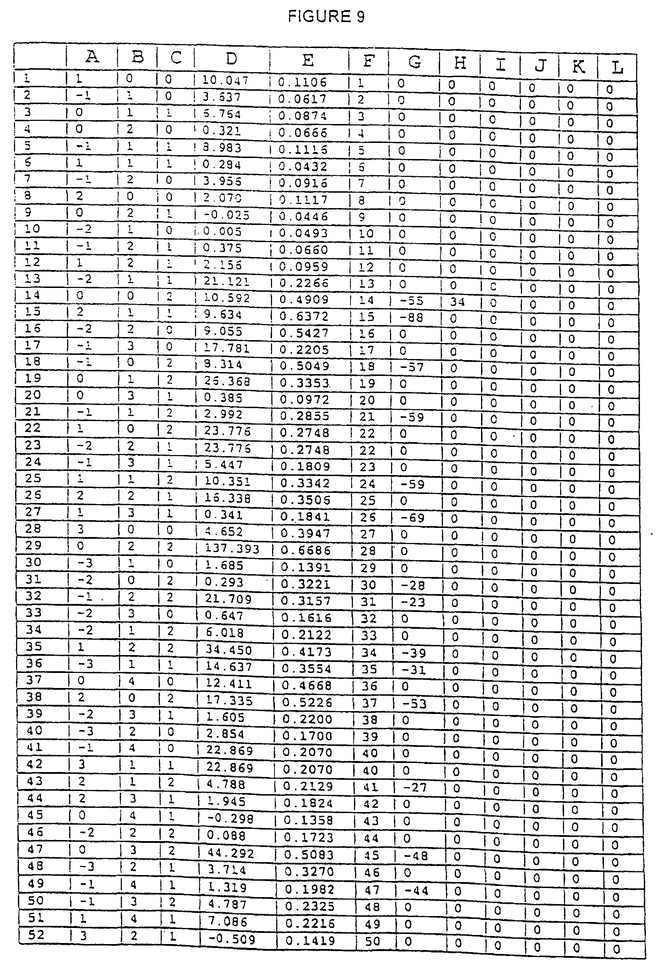

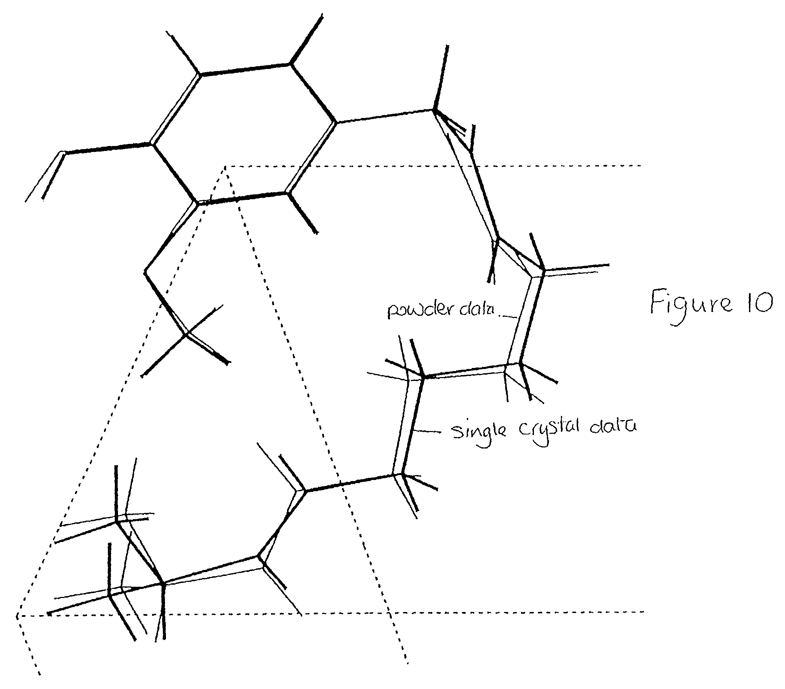

An example employing the simulated annealing process to the determination of the crystal structure of capsaicin is shown in Figures 8 to 10. Experimental powder diffraction data for capsaicin is shown in Figure 8 with the first page of a tabulation of the reduced representation of the data produced using the above mentioned method shown in Figure 9. In Figure 10 the crystal structure obtained from powder diffraction data alone is overlaid upon the crystal structure obtained by the conventional single crystal diffraction route is shown. The experimental powder diffraction data consists of 9901 data points whilst the reduced representation of this data as exampled in Figure 9 contains only 379 data points, in total.

Figure 9 shows the first page of the tabulated reduced representation consisting of twelve columns with columns **A** to **C** identifying the Miller indices of the Bragg reflections; column **D** identifying the Bragg intensity; column **E** an esd for the Bragg intensity; column F provides a numerical count of the separable reflections whereby identical numbers in consecutive rows indicates where reflections are so close together they cannot be separated; and columns **G** to **L** describe the percentage correlation between related reflections. In this example the powder diffraction data has been Pawley fitted using a predetermined unit cell and space group. Reflection intensities have been allowed to vary as variables in a least squares fit to the diffraction data. The result is a file containing estimates of the individual reflection intensities. However, where reflections lie very close together in 20 they may be treated as a clump. Where the reflections are close, but not close enough to be treated as a clump, the correlation terms provide information on how the respective intensities are related. Thus, the first reflection at line 1:

    1 0 0   10.047   0.1106   1 0 0 0 0 0 0

is an isolated reflection whereas at lines 18 and 19 two correlated reflections are identified. At lines 41 and 42 two reflections are identified that lie so close together that they are treated as a single variable intensity. With the reduced representation the diffraction data has been effectively condensed into the data contained in columns **D** and **E** in combination with non-zero elements of columns **G** to **L**.

The close agreement between the two structures shown in Figure 10 demonstrates one characteristic of the method described above - the ability of the simulated annealing method to 'fine tune' the structure, generally finding a solution very close to the global minimum in $\chi^2$ space. This structure solution, which involved the optimisation of 16 degrees of freedom (10 internal, 6 external) took approximately 40 minutes to execute on a DEC Alphastation 500/500.

In another analysis, the molecule under study is said to possess a total energy equal to the sum of its potential energy (proportional to the current $\chi^2$) and some kinetic energy applied to start the molecule moving over the $\chi^2$ hypersurface. The gradient of the $\chi^2$ hypersurface with respect to each of the degrees of freedom is calculated and it is these gradients that control the resultant trajectory of the molecule and thus the way in which it explores the hypersurface. Lowering the temperature of the system in a way analogous to that already described gradually decreases the kinetic energy of the system and that in turn leads to the molecular configuration conforming to the global minimum of the $\chi^2$ hypersurface.

In a further adaption of the method, regardless of the global optimisation strategy used, both local and semi-global optimisation methods (e.g. Newton-Raphson, simplex) can be invoked when the $\chi^2$ value reaches some predetermined value that is anticipated to be in the vicinity of the global minimum, thus providing accelerated convergence.

With the method and apparatus described above, molecular crystal structures may be solved from powder diffraction data alone. Definition of the molecular fragments in terms of internal co-ordinates means that for a single molecular fragment, problem complexity scales with the number of variable torsion angles rather than with the number of atoms in the fragment. Thus, complex structures can be represented by quite short chromosomes and solved relatively easily. The simple description of molecular geometry employed, together with the genetic algorithm /simulated annealing analyses and the specified fitness function has thus been shown to be particularly powerful in determining crystal structures from powder diffraction data in a relatively short time frame.

To assist in an understanding of the invention, the method has been described with reference to functional, i.e. analyser/processor units. It will of course be apparent that in practice the method is implemented as a program on a computer. Indeed, one of the advantages of this method is that the program can be implemented on a number of different computer architectures, including personal computers and a network of personal computers/workstations acting as a parallel computer.

**Claims**

1. A method for determining molecular crystal structures from powder diffraction data comprising the steps of: generating a reduced representation of the powder diffraction pattern in dependence on a predetermined unit cell and space group of the molecule under examination in which the total quantity of diffraction data is significantly reduced whilst maintaining the characteristics of the diffraction data that are representative of the crystal structure under examination; determining a set of variables for describing trial molecular structures, derived from predetermined internal co-ordinates and said space group; assigning values to said variables thereby creating a population of trial structures each defined by a unique set of values for said variables; calculating a fitness for each trial structure with respect to the reduced representation of the powder diffraction pattern; determining whether any one of the calculated fitnesses is less than or equal to a predetermined threshold; where none of the calculated fitnesses is less than or equal to the threshold value, selecting at least one survivor from the population of trial structures, altering the values of the variables of at least one of the survivors in accordance with one or more predetermined rules, calculating the fitnesses of the new trial structures; and repeating the steps of selecting survivors, altering the values of the variables and calculating the fitnesses of the new trial structures until at least one of the calculated fitnesses is less than or equal to the threshold value, and where at least one of the calculated fitnesses is less than or equal to the threshold, outputting at least one trial molecular crystal structure represented by the successful sets of values.

2. A method as claimed in claim 1, wherein the reduced representation includes single values representative of the intensity of each reflection in the powder diffraction data and one or more factors representative of the extent to which adjacent reflections overlap.

3. The method as claimed in claim 2, wherein the reduced representation consists of a structure factor intensity listing and associated covariance matrix.

4. The method as claimed in either of claims 2 or 3, wherein the total data in the reduced representation is reduced by a factor substantially equal to the number of data points in the original powder diffraction data divided by the number Bragg reflections in the measured data range.

5. The method as claimed in either of claims 3 or 4, wherein the fitness $\chi^2$ of each of the trial structures is determined using the following function:

$$\chi^2 = \Sigma_h \, \Sigma_k \, \{(I_h - c|F_h|^2) \, (V^{-1})_{hk} \, (I_k - c|F_k|^2)\}$$

where:

$I_{h,k}$ = extracted intensity
$V_{hk}$ = covariance matrix
$c$ = a scale factor
$F_{h,k}$ = calculated structure factor from trial structure

6. The method as claimed in any one of the preceding claims, wherein the set of variables consists of three co-ordinates representative of the location of the molecule within the unit cell and three independent co-ordinates representative of the orientation of the molecule within the unit cell.

7. The method as claimed in claim 6, wherein the set of variables includes one or more co-ordinates representative of variable torsion angles, bond angles or bond lengths.

8. The method as claimed in any one of the preceding claims including the step of determining the unit cell and space group for the molecule under examination.

9. The method as claimed in any one of the preceding claims including the step of determining the set of internal co-ordinates.

10. The method as claimed in any one of the preceding claims, further including the step of monitoring the number of iterations in which new trial structures are generated and halting the method and outputting the trial crystal structure with the best calculated fitness after completion of a predetermined number of iterations.

11. The method as claimed in any one of the preceding claims, wherein the selection of survivors and the alteration of the values of the variables is based on a simulated annealing procedure.

12. Apparatus for determining molecular crystal structures comprising a structure factor analyser for generating from experimental powder diffraction data for the molecule under examination a reduced representation of the powder diffraction pattern based on a predetermined unit cell and space group in which the total quantity of diffraction data is significantly reduced whilst the characteristics of the diffraction data representative of the crystal structure under examination are maintained; a controller for determining a set of variables for describing trial molecular structures, derived from predetermined internal co-ordinates and said space group; a searching processor for creating a population of trial structures each defined by a unique set of values for said variables said searching processor including a fitness analyser for calculating a fitness for each trial structure with respect to the reduced representation of the powder diffraction pattern, a thresholding device for determining whether any one of the calculated fitnesses is less than or equal to a predetermined threshold, a survivor selector for selecting at least one survivor from the population of trial structures, a variable adjustment device for altering the values of the variables of at least one of the survivors and output means for outputting the one or more trial molecular crystal structures having calculated fitnesses less than or equal to the threshold value.

13. Apparatus as claimed in claim 12, wherein the reduced representation includes single values representative of the intensity of each reflection in the powder diffraction data and one or more factors representative of the extent to which adjacent reflections overlap.

14. Apparatus as claimed in claim 13, wherein the structure factor analyser generates a reduced representation consists of a structure factor intensity listing and associated covariance matrix.

15. The method as claimed in either of claims 13 or 14, wherein the total data in the reduced representation is reduced by a factor substantially equal to the number of data points in the original powder diffraction data divided by the number Bragg reflections in the measured data range.

16. Apparatus as claimed in either of claims 14 or 15, wherein the fitness analyser determines the fitness $\chi^2$ of each of the trial structures using the following function:

$$\chi^2 = \Sigma_h \, \Sigma_k \, \{(I_h - c|F_h|^2) \, (V^{-1})_{hk} \, (I_k - c|F_k|^2)\}$$

where:

$I_{h,k}$ = extracted intensity from the structure factor analyser
$V_{hk}$ = covariance matrix from the structure factor analyser
$c$ = a scale factor
$F_{h,k}$ = calculated structure factor from trial structure

17. Apparatus as claimed in any one of claims 12 to 16, wherein controller determines a set of variables consists of three co-ordinates representative of the location of the molecule within the unit cell and three independent co-ordinates representative of the orientation of the molecule within the unit.

18. Apparatus as claimed in any one of claims 12 to 17, wherein the structure factor analyser additionally determines the unit cell and space group for the molecule under examination.

19. Apparatus as claimed in any one of claims 12 to 18 including a co-ordinate generator for determining the set of internal co-ordinates.

20. Apparatus as claimed in any one of claims 12 to 19, further including a counter for monitoring the number of iterations of new trial structures.

## Patentansprüche

1. Verfahren zur Bestimmung von Molekülkristallstrukturen anhand von Pulverdiffraktionsdaten, umfassend die folgenden Schritte: Erzeugen einer reduzierten Repräsentation des Pulverdiffraktionsmusters in Abhängigkeit von einer vorbestimmten Einheitszelle und Raumgruppe des untersuchten Moleküls, wobei die Gesamtmenge der Diffraktionsdaten wesentlich reduziert ist, während die Charakteristiken der Diffraktionsdaten beibehalten werden, die für die untersuchte Kristallstruktur repräsentativ sind; Bestimmen eines Satzes von Variablen zur Beschreibung von Versuchsmolekülstrukturen, abgeleitet von vorbestimmten inneren Koordinaten und der genannten Raumgruppe; Zuordnen von Werten zu den genannten Variablen, so dass eine Population von Versuchsstrukturen erzeugt wird, die jeweils durch einen einzigartigen Satz von Werten für die genannten Variablen definiert sind; Berechnen einer Eignung für jede Versuchsstruktur mit Bezug auf die reduzierte Repräsentation des Pulverdiffraktionsmusters; Bestimmen, ob irgendeine der berechneten Eignungen unter oder auf einer vorbestimmten Schwelle liegt; wenn keine der berechneten Eignungen unter oder auf dem Schwellenwert liegt, Auswählen von wenigstens einer Überlebenden der Population von Versuchsstrukturen, Verändern der Werte der Variablen von wenigstens einer der Überlebenden gemäß einer oder mehreren vorbestimmten Regel(n); Berechnen der Eignungen der neuen Versuchsstrukturen; und Wiederholen der Schritte des Selektierens von Überlebenden, Verändern der Werte der Variablen und Berechnen der Eignungen der neuen Versuchsstrukturen, bis wenigstens eine der berechneten Eignungen unter oder auf dem Schwellenwert liegt, und wenn wenigstens eine der berechneten Eignungen unter oder auf der Schwelle liegt, Ausgeben von wenigstens einer Versuchsmolekülkristallstruktur, die durch die erfolgreichen Wertesätze repräsentiert wird.

2. Verfahren nach Anspruch 1, wobei die reduzierte Repräsentation einzelne Werte, die für die Intensität jeder Reflexion in den Pulverdiffraktionsdaten repräsentativ ist, und einen oder mehrere Faktoren beinhaltet, die für den Überlappungsgrad nebeneinander liegender Reflexionen repräsentativ sind.

3. Verfahren nach Anspruch 2, wobei die reduzierte Repräsentation aus einer Strukturfaktorintensitätsauflistung und einer assoziierten Kovarianzmatrix besteht.

4. Verfahren nach Anspruch 2 oder 3, wobei die gesamten Daten in der reduzierten Repräsentation durch einen Faktor reduziert sind, der im Wesentlichen der Anzahl von Datenpunkten in den ursprünglichen Pulverdiffraktionsdaten entspricht, dividiert durch die Anzahl von Bragg-Reflexionen im gemessenen Datenbereich.

5. Verfahren nach Anspruch 3 oder 4, wobei die Eignung $\chi^2$ von jeder der Versuchsstrukturen mit der folgenden Funktion bestimmt wird:

$$\chi^2 = \Sigma_h \Sigma_k \{(I_h - c|F_h|^2)\ (V^{-1})_{hk}(I_k - c|F_k|^2)\}$$

wobei:

$I_{h,k}$ = abgeleitete Intensität
$V_{hk}$ = Kovarianzmatrix
$c$ = ein Maßstabsfaktor
$F_{h,k}$ = berechneter Strukturfaktor von Versuchsstruktur

6. Verfahren nach einem der vorherigen Ansprüche, wobei der Satz von Variablen aus drei Koordinaten, die für den Ort des Moleküls innerhalb der Einheitszelle repräsentativ sind, und drei unabhängigen Koordinaten besteht, die für die Ausrichtung des Moleküls innerhalb der Einheitszelle repräsentativ sind.

7. Verfahren nach Anspruch 6, wobei der Satz von Variablen eine oder mehrere Koordinaten beinhaltet, die für variable Torsionswinkel, Bindungswinkel oder Bindungslängen repräsentativ sind.

8. Verfahren nach einem der vorherigen Ansprüche, umfassend den Schritt des Bestimmens der Einheitszelle und Raumgruppe für das untersuchte Molekül.

9. Verfahren nach einem der vorherigen Ansprüche, umfassend den Schritt des Bestimmens des Satzes von inneren Koordinaten.

10. Verfahren nach einem der vorherigen Ansprüche, ferner umfassend den Schritt des Überwachens der Anzahl von Iterationen, bei denen neue Versuchsstrukturen erzeugt werden, und Stoppen des Verfahrens und Ausgeben der Versuchskristallstruktur mit der besten berechneten Eignung nach Abschluss einer vorbestimmten Anzahl von Iterationen.

11. Verfahren nach einem der vorherigen Ansprüche, wobei die Selektion von Überlebenden und die Veränderung der Werte der Variablen auf einem simulierten Annealingvorgang basiert.

12. Vorrichtung zur Bestimmung von Molekülkristallstrukturen, umfassend einen Strukturfaktoranalysator zum Erzeugen, anhand experimenteller Pulverdiffraktionsdaten für das untersuchte Molekül, einer reduzierten Repräsentation des Pulverdiffraktionsmusters auf der Basis einer vorbestimmten Einheitszelle und Raumgruppe, wobei die Gesamtmenge der Diffraktionsdaten wesentlich reduziert ist, während die Charakteristiken der Diffraktionsdaten beibehalten werden, die für die untersuchte Kristallstruktur repräsentativ sind; eine Steuerung zum Bestimmen eines Satzes von Variablen zur Beschreibung von Versuchsmolekülstrukturen, abgeleitet von vorbestimmten inneren Koordinaten und der genannten Raumgruppe; einen Suchprozessor zum Erzeugen einer Population von Versuchsstrukturen, die jeweils durch einen eindeutigen Satz von Werten für die genannten Variablen definiert sind, wobei der genannte Suchprozessor einen Eignungsanalysator beinhaltet, der eine Eignung für jede Versuchsstruktur mit Bezug auf die reduzierte Repräsentation des Pulverdiffraktionsmusters berechnet; eine Schwellenwertbildungsvorrichtung zum Bestimmen, ob irgendeine der berechneten Eignungen unter oder auf einer vorbestimmten Schwelle liegt, ein Überlebendenselektor zum Selektieren von wenigstens einer Überlebenden der Population von Versuchsstrukturen, eine Variableneinstellvorrichtung zum Verändern der Werte der Variablen von wenigstens einer der Überlebenden, und ein Ausgabemittel zum Ausgeben der einen oder mehreren Versuchsmolekülkristallstruktur(en), die berechnete Eignungen haben, die unter oder auf dem Schwellenwert liegen.

13. Vorrichtung nach Anspruch 12, wobei die reduzierte Repräsentation einzelne Werte, die für die Intensität jeder Reflexion in den Pulverdiffraktionsdaten repräsentativ sind, und einen oder mehrere Faktoren beinhaltet, die für den Überlappungsgrad nebeneinander liegender Reflexionen repräsentativ sind.

14. Vorrichtung nach Anspruch 13, wobei der Strukturfaktoranalysator eine reduzierte Repräsentation erzeugt, die aus einer Strukturfaktorintensitätsauflistung und einer assoziierten Kovarianzmatrix besteht.

15. Verfahren nach Anspruch 13 oder 14, wobei die gesamten Daten in der reduzierten Repräsentation um einen Faktor reduziert werden, der im Wesentlichen der Anzahl von Datenpunkten in den ursprünglichen Pulverdiffraktionsdaten entspricht, dividiert durch die Anzahl von Bragg-Reflexionen in dem gemessenen Datenbereich.

16. Vorrichtung nach Anspruch 14 oder 15, wobei der Eignungsanalysator die Eignung $\chi^2$ von jeder der Versuchsstrukturen mit der folgenden Funktion bestimmt:

$$\chi^2 = \Sigma_h \Sigma_k \{(I_h - c|F_h|^2)\,(V^{-1})_{hk}(I_k - c|F_k|^2)\}$$

wobei:

$I_{h,k}$ = abgeleitete Intensität vom Strukturfaktoranalysator

$V_{hk}$ = Kovarianzmatrix vom Strukturfaktoranalysator

$c$ = ein Maßstabsfaktor

$F_{h,k}$ = berechneter Strukturfaktor von Versuchsstruktur

17. Vorrichtung nach einem der Ansprüche 12 bis 16, wobei die Steuerung einen Satz von Variablen bestimmt, der aus drei Koordinaten, die für den Ort des Moleküls innerhalb der Einheitszelle repräsentativ sind, und drei unabhängigen Koordinaten besteht, die für die Ausrichtung des Moleküls innerhalb der Einheit repräsentativ sind.

18. Vorrichtung nach einem der Ansprüche 12 bis 17, wobei der Strukturfaktoranalysator zusätzlich die Einheitszelle und Raumgruppe für das untersuchte Molekül bestimmt.

19. Vorrichtung nach einem der Ansprüche 12 bis 18, einschließlich eines Koordinatengenerators zum Bestimmen des Satzes von inneren Koordinaten.

20. Vorrichtung nach einem der Ansprüche 12 bis 19, ferner umfassend einen Zähler zum Überwachen der Anzahl von Iterationen von neuen Versuchsstrukturen.

## Revendications

1. Procédé de détermination des structures de cristaux moléculaires à partir de données de diffraction de poudre comprenant les étapes suivantes : générer une représentation réduite du modèle de diffraction de poudre en fonction d'une cellule unitaire et d'un groupe spatial prédéterminés de la molécule subissant l'examen dans laquelle la quantité totale de données de diffraction est considérablement réduite tout en maintenant les caractéristiques des données de diffraction qui sont représentatives de la structure du cristal subissant l'examen ; déterminer un ensemble de variables pour décrire des structures moléculaires d'essai, dérivées de coordonnées internes prédéterminées et dudit groupe spatial ; affecter des valeurs aux dites variables pour créer ainsi une population de structures d'essai dont chacune est définie par un ensemble unique de valeurs pour lesdites variables ; calculer un ajustement pour chaque structure d'essai par rapport à la représentation réduite du modèle de diffraction de poudre ; déterminer si l'un quelconque des ajustements calculés est inférieur ou égal à un seuil prédéterminé ; si aucun des ajustements calculés n'est inférieur ou égal à la valeur seuil, sélectionner au moins un survivant dans la population de structures d'essai, modifier les valeurs des variables d'au moins un des survivants conformément à une ou plusieurs règles prédéterminées, calculer l'ajustement des nouvelles structures d'essai ; et répéter les étapes de sélection des survivants, de modification des valeurs des variables et de calcul des ajustements des nouvelles structures d'essai jusqu'à ce qu'au moins un des ajustements calculés soit inférieur ou égal à la valeur seuil et, si au moins l'un des ajustements calculés est inférieur ou égal au seuil, sortir au moins une structure de cristal moléculaire d'essai représentée par les ensembles de valeurs acceptables.

2. Procédé selon la revendication 1, dans lequel la représentation réduite comprend des valeurs simples représentatives de l'intensité de chaque réflexion dans les données de diffraction de poudre et un ou plusieurs facteurs représentatifs de l'étendue du chevauchement des réflexions contiguës.

3. Procédé selon la revendication 2, dans lequel la représentation réduite comprend une liste d'intensités de facteurs de structure et la matrice de covariances associée.

4. Procédé selon l'une quelconque des revendications 2 ou 3, dans lequel les données totales dans la représentation réduite sont réduites d'un facteur sensiblement égal au nombre de points de données dans les données de diffraction de poudre d'origine divisé par le nombre de réflexions de Bragg dans la gamme de données mesurées.

5. Procédé selon l'une quelconque des revendications 3 ou 4, dans lequel l'ajustement $x^2$ de chacune des structures d'essai est déterminé à l'aide de la fonction suivante :

$$x^2 = \Sigma_h \Sigma_k \{(I_h - c|F_h|^2) \, (V^{-1})_{hk} \, (I_k - c|F_k|^2)\}$$

où :

$I_{h,k}$ = intensité extraite
$V_{hk}$ = matrice de covariances
$c$ = un facteur d'échelle
$F_{h,k}$ = facteur de structures calculé à partir de la structure d'essai

6. Procédé selon l'une quelconque des revendications précédentes, dans lequel l'ensemble de variables est constitué de trois coordonnées représentatives de l'emplacement de la molécule à l'intérieur de la cellule unitaire et de trois coordonnées indépendantes représentatives de l'orientation de la molécule à l'intérieur de la cellule unitaire.

7. Procédé selon la revendication 6, dans lequel l'ensemble de variables comprend une ou plusieurs coordonnées représentatives d'angles de torsion, angles de liaison ou longueurs de liaison variables.

8. Procédé selon l'une quelconque des revendications précédentes, comprenant l'étape de détermination de la cellule unitaire et du groupe spatial pour la molécule subissant l'examen.

9. Procédé selon l'une quelconque des revendications précédentes, comprenant l'étape de détermination de l'ensemble de coordonnées internes.

10. Procédé selon l'une quelconque des revendications précédentes, comprenant en outre l'étape de contrôle du nombre d'itérations dans lesquelles sont générées les nouvelles structures d'essai et cessation du procédé et sortie de la structure de cristal d'essai avec le meilleur ajustement calculé après exécution d'un nombre prédéterminé d'itérations.

11. Procédé selon l'une quelconque des revendications précédentes, dans lequel la sélection des survivants et la modification des valeurs des variables sont basées sur une procédure de recuit simulé.

12. Dispositif pour déterminer des structures de cristaux moléculaires comprenant un analyseur de facteurs de structure pour générer à partir de données de diffraction de poudre expérimentales pour la molécule subissant l'examen une représentation réduite du modèle de diffraction de poudre basée sur une cellule unitaire et un groupe spatial prédéterminés dans lequel la quantité totale de données de diffraction est considérablement réduite tandis que les caractéristiques des données de diffraction représentatives de la structure du cristal subissant l'examen sont maintenues ; un contrôleur pour déterminer un ensemble de variables pour décrire les structures moléculaires d'essai, dérivé de coordonnées internes prédéterminées et dudit groupe spatial ; un processeur de recherche pour créer une population de structures d'essai dont chacune est définie par un ensemble unique de valeurs pour lesdites variables, ledit processeur de recherche comprenant un analyseur d'ajustement pour calculer un ajustement pour chaque structure d'essai par rapport à la représentation réduite du modèle de diffraction de poudre, un dispositif de détermination de seuil pour déterminer si l'un quelconque des ajustements calculés est inférieur ou égal à un seuil prédéterminé, un sélecteur de survivant pour sélectionner au moins un survivant dans la population de structures d'essai, un dispositif d'ajustement variable pour modifier les valeurs des variables d'au moins un des survivants et un moyen de sortie pour sortir la ou les structures de cristaux moléculaires d'essai ayant des ajustements calculés inférieurs ou égaux à la valeur seuil.

**13.** Dispositif selon la revendication 12, dans lequel la représentation réduite comprend des valeurs simples représentatives de l'intensité de chaque réflexion dans les données de diffraction de poudre et un ou plusieurs facteurs représentatifs de l'étendue du chevauchement des réflexions contiguës.

**14.** Dispositif selon la revendication 13, dans lequel l'analyseur de facteurs de structure génère une représentation réduite comprenant une liste d'intensités de facteurs de structure et la matrice de covariances associée.

**15.** Le procédé selon l'une quelconque des revendications 13 ou 14, dans lequel les données totales dans la représentation réduite sont réduites d'un facteur sensiblement égal au nombre de points de données dans les données de diffraction de poudre d'origine divisé par le nombre de réflexions de Bragg dans la gamme de données mesurées.

**16.** Procédé selon l'une quelconque des revendications 14 ou 15, dans lequel l'analyseur d'ajustement détermine l'ajustement $x^2$ de chacune des structures d'essai à l'aide de la fonction suivante :

$$x^2 = \Sigma_h \Sigma_k \left\{ \left( I_h - c|F_h|^2 \right) \left( V^{-1} \right)_{hk} \left( I_k - c|F_k|^2 \right) \right\}$$

où :

$I_{h,k}$ = intensité extraite de l'analyseur de facteurs de structure

$V_{hk}$ = matrice de covariances provenant de l'analyseur de facteurs de structure

c = un facteur d'échelle

$F_{h,k}$ = facteur de structures calculé à partir de la structure d'essai

**17.** Dispositif selon l'une quelconque des revendications 12 à 16, dans lequel le contrôleur détermine un ensemble de variables constitué de trois coordonnées représentatives de l'emplacement de la molécule à l'intérieur de la cellule unitaire et de trois coordonnées indépendantes représentatives de l'orientation de la molécule à l'intérieur de l'unité.

**18.** Dispositif selon l'une quelconque des revendications 12 à 17, dans lequel l'analyseur de facteurs de structure détermine en outre la cellule unitaire et le groupe spatial pour la molécule subissant l'examen.

**19.** Dispositif selon l'une quelconque des revendications 12 à 18, comprenant un générateur de coordonnées pour déterminer l'ensemble de coordonnées internes.

**20.** Dispositif selon l'une quelconque des revendications 12 à 19, comprenant en outre un compteur pour contrôler le nombre d'itération des nouvelles structures d'essai.

Fig 1.

EP 1 000 347 B1

Fig 2.

FIGURE 3

Fig 4.

Fig 5a.

Fig 5b.

Fig 5c.

Fig 5d.

Fig 6.

EP 1 000 347 B1

$\chi^2$

average

best

Generation No

Fig 7a.

Fig 7b.

Fig 7c.

FIGURE 8

EP 1 000 347 B1

FIGURE 9

| | A | B | C | D | E | F | G | H | I | J | K | L |
|---|---|---|---|---|---|---|---|---|---|---|---|---|
| 1 | 1 | 0 | 0 | 10.047 | 0.1106 | 1 | 0 | 0 | 0 | 0 | 0 | 0 |
| 2 | -1 | 1 | 0 | 3.637 | 0.0617 | 2 | 0 | 0 | 0 | 0 | 0 | 0 |
| 3 | 0 | 1 | 1 | 5.764 | 0.0874 | 3 | 0 | 0 | 0 | 0 | 0 | 0 |
| 4 | 0 | 2 | 0 | 0.321 | 0.0666 | 4 | 0 | 0 | 0 | 0 | 0 | 0 |
| 5 | -1 | 1 | 1 | 8.983 | 0.1116 | 5 | 0 | 0 | 0 | 0 | 0 | 0 |
| 6 | 1 | 1 | 1 | 0.294 | 0.0432 | 6 | 0 | 0 | 0 | 0 | 0 | 0 |
| 7 | -1 | 2 | 0 | 3.956 | 0.0916 | 7 | 0 | 0 | 0 | 0 | 0 | 0 |
| 8 | 2 | 0 | 0 | 2.070 | 0.1117 | 8 | 0 | 0 | 0 | 0 | 0 | 0 |
| 9 | 0 | 2 | 1 | -0.025 | 0.0446 | 9 | 0 | 0 | 0 | 0 | 0 | 0 |
| 10 | -2 | 1 | 0 | 0.005 | 0.0493 | 10 | 0 | 0 | 0 | 0 | 0 | 0 |
| 11 | -1 | 2 | 1 | 0.375 | 0.0660 | 11 | 0 | 0 | 0 | 0 | 0 | 0 |
| 12 | 1 | 2 | 1 | 2.156 | 0.0959 | 12 | 0 | 0 | 0 | 0 | 0 | 0 |
| 13 | -2 | 1 | 1 | 21.121 | 0.2266 | 13 | 0 | 0 | 0 | 0 | 0 | 0 |
| 14 | 0 | 0 | 2 | 10.592 | 0.4909 | 14 | -55 | 34 | 0 | 0 | 0 | 0 |
| 15 | 2 | 1 | 1 | 9.634 | 0.6372 | 15 | -88 | 0 | 0 | 0 | 0 | 0 |
| 16 | -2 | 2 | 0 | 9.055 | 0.5427 | 16 | 0 | 0 | 0 | 0 | 0 | 0 |
| 17 | -1 | 3 | 0 | 17.781 | 0.2205 | 17 | 0 | 0 | 0 | 0 | 0 | 0 |
| 18 | -1 | 0 | 2 | 9.314 | 0.5049 | 18 | -57 | 0 | 0 | 0 | 0 | 0 |
| 19 | 0 | 1 | 2 | 25.368 | 0.3353 | 19 | 0 | 0 | 0 | 0 | 0 | 0 |
| 20 | 0 | 3 | 1 | 0.385 | 0.0972 | 20 | 0 | 0 | 0 | 0 | 0 | 0 |
| 21 | -1 | 1 | 2 | 2.992 | 0.2855 | 21 | -59 | 0 | 0 | 0 | 0 | 0 |
| 22 | 1 | 0 | 2 | 23.776 | 0.2748 | 22 | 0 | 0 | 0 | 0 | 0 | 0 |
| 23 | -2 | 2 | 1 | 23.776 | 0.2748 | 22 | 0 | 0 | 0 | 0 | 0 | 0 |
| 24 | -1 | 3 | 1 | 5.447 | 0.1809 | 23 | 0 | 0 | 0 | 0 | 0 | 0 |
| 25 | 1 | 1 | 2 | 10.351 | 0.3342 | 24 | -59 | 0 | 0 | 0 | 0 | 0 |
| 26 | 2 | 2 | 1 | 16.338 | 0.3505 | 25 | 0 | 0 | 0 | 0 | 0 | 0 |
| 27 | 1 | 3 | 1 | 0.341 | 0.1841 | 26 | -69 | 0 | 0 | 0 | 0 | 0 |
| 28 | 3 | 0 | 0 | 4.652 | 0.3947 | 27 | 0 | 0 | 0 | 0 | 0 | 0 |
| 29 | 0 | 2 | 2 | 137.393 | 0.6686 | 28 | 0 | 0 | 0 | 0 | 0 | 0 |
| 30 | -3 | 1 | 0 | 1.685 | 0.1391 | 29 | 0 | 0 | 0 | 0 | 0 | 0 |
| 31 | -2 | 0 | 2 | 0.293 | 0.3221 | 30 | -28 | 0 | 0 | 0 | 0 | 0 |
| 32 | -1 | 2 | 2 | 21.709 | 0.3157 | 31 | -23 | 0 | 0 | 0 | 0 | 0 |
| 33 | -2 | 3 | 0 | 0.647 | 0.1616 | 32 | 0 | 0 | 0 | 0 | 0 | 0 |
| 34 | -2 | 1 | 2 | 6.018 | 0.2122 | 33 | 0 | 0 | 0 | 0 | 0 | 0 |
| 35 | 1 | 2 | 2 | 34.450 | 0.4173 | 34 | -39 | 0 | 0 | 0 | 0 | 0 |
| 36 | -3 | 1 | 1 | 14.637 | 0.3554 | 35 | -31 | 0 | 0 | 0 | 0 | 0 |
| 37 | 0 | 4 | 0 | 12.411 | 0.4668 | 36 | 0 | 0 | 0 | 0 | 0 | 0 |
| 38 | 2 | 0 | 2 | 17.335 | 0.5226 | 37 | -53 | 0 | 0 | 0 | 0 | 0 |
| 39 | -2 | 3 | 1 | 1.605 | 0.2200 | 38 | 0 | 0 | 0 | 0 | 0 | 0 |
| 40 | -3 | 2 | 0 | 2.854 | 0.1700 | 39 | 0 | 0 | 0 | 0 | 0 | 0 |
| 41 | -1 | 4 | 0 | 22.869 | 0.2070 | 40 | 0 | 0 | 0 | 0 | 0 | 0 |
| 42 | 3 | 1 | 1 | 22.869 | 0.2070 | 40 | 0 | 0 | 0 | 0 | 0 | 0 |
| 43 | 2 | 1 | 2 | 4.788 | 0.2129 | 41 | -27 | 0 | 0 | 0 | 0 | 0 |
| 44 | 2 | 3 | 1 | 1.945 | 0.1824 | 42 | 0 | 0 | 0 | 0 | 0 | 0 |
| 45 | 0 | 4 | 1 | -0.298 | 0.1358 | 43 | 0 | 0 | 0 | 0 | 0 | 0 |
| 46 | -2 | 2 | 2 | 0.088 | 0.1723 | 44 | 0 | 0 | 0 | 0 | 0 | 0 |
| 47 | 0 | 3 | 2 | 44.292 | 0.5083 | 45 | -48 | 0 | 0 | 0 | 0 | 0 |
| 48 | -3 | 2 | 1 | 3.714 | 0.3270 | 46 | 0 | 0 | 0 | 0 | 0 | 0 |
| 49 | -1 | 4 | 1 | 1.319 | 0.1982 | 47 | -44 | 0 | 0 | 0 | 0 | 0 |
| 50 | -1 | 3 | 2 | 4.787 | 0.2325 | 48 | 0 | 0 | 0 | 0 | 0 | 0 |
| 51 | 1 | 4 | 1 | 7.086 | 0.2216 | 49 | 0 | 0 | 0 | 0 | 0 | 0 |
| 52 | 3 | 2 | 1 | -0.509 | 0.1419 | 50 | 0 | 0 | 0 | 0 | 0 | 0 |

Figure 10

powder data

single crystal data